## Europäisches Patentamt
## European Patent Office
## Office européen des brevets

(19)

(11) Numéro de publication: **0 292 375 B1**

(12)

# FASCICULE DE BREVET EUROPEEN

(45) Date de publication du fascicule du brevet:
26.09.90

(51) Int. Cl.⁵: **F16C 1/10,** F22B 37/00, B24B 39/02

(21) Numéro de dépôt: 88401189.1

(22) Date de dépôt: **17.05.88**

(54) **Installation pour commander à distance la translation d'un organe tel qu'un outil de micromartelage dans un tube, notamment de générateur de vapeur.**

(30) Priorité: **19.05.87 FR 8706970**

(43) Date de publication de la demande:
**23.11.88 Bulletin 88/47**

(45) Mention de la délivrance du brevet:
**26.09.90 Bulletin 90/39**

(84) Etats contractants désignés:
**BE CH DE ES GB IT LI SE**

(56) Documents cités:
**EP-A- 0 027 388
DE-A- 3 120 378
FR-A- 2 526 532
GB-A- 1 219 683**

(73) Titulaire: **INTERCONTROLE, 4 à 10 Place Vauban Slic 433, F-94583 Rungis Cedex(FR)**
Titulaire: **CYBERG Société Anonyme, 23, Avenue de la Baltique Z.A. de Courtaboeuf, F-91940 Les Ulis Cédex(FR)**

(72) Inventeur: **Tocci, Jean-Louis, 74, rue de Seine, F-75006 Paris(FR)**
Inventeur: **Blotas, Bruno, 49 rue Sébastien Mercier, F-75015 Paris(FR)**
Inventeur: **François, Daniel, 227 rue des Ruelles, F-41100 Vendôme(FR)**

(74) Mandataire: **Mongrédien, André et al, c/o BREVATOME 25, rue de Ponthieu, F-75008 Paris(FR)**

## Description

L'invention concerne une installation permettant de commander à distance la translation d'un organe à l'intérieur d'un tube sur une distance donnée.

Une telle installation peut notamment être utilisée pour introduire un outil de micromartelage jusqu'à proximité de la zone dudgeonnée d'un tube, dans un générateur de vapeur, puis pour escamoter cet outil lorsque le travail est terminé. Elle peut aussi être utilisée pour introduire un outil d'une autre nature, ainsi qu'un détecteur tel qu'une sonde de mesure ou de contrôle à l'intérieur d'un tube de générateur de vapeur ou d'un échangeur de chaleur quelconque.

Dans les générateurs de vapeur qui équipent les centrales nucléaires, la réalisation de différentes opérations d'usinage, de mesure et de contrôle à l'intérieur des tubes de l'échangeur pose des problèmes délicats lorsque l'intervention se situe après une certaine période de fonctionnement de la centrale. En effet, la radioactivité qui règne à l'intérieur du générateur est alors telle qu'une intervention directe d'un opérateur dans le générateur doit être évitée ou écourtée au maximum.

Pour cette raison, on a développé depuis de nombreuses années des dispositifs appelés "araignées", qui s'accrochent dans les extrémités des tubes et supportent les outils ou les sondes. Le déplacement de ces araignées, qui est commandé à distance, permet d'amener successivement ces organes en face de chacun des tubes du générateur. La pénétration d'un opérateur à l'intérieur du générateur est donc soit totalement supprimée, soit réduite au temps nécessaire à la mise en place et à l'extraction de l'araignée.

L'une des opérations qui doit être réalisée à l'intérieur des tubes des générateurs de vapeur équipant certaines centrales nucléaires en fonctionnement consiste à effectuer un micromartelage de la surface intérieure des tubes, à l'endroit où ces tubes ont été fixés par dudgeonnage dans les plaques qui les supportent. Cette opération a pour but de supprimer les contraintes résiduelles créées par le dudgeonnage et qui sont à l'origine de phénomènes de fissuration des tubes à ce niveau. La réalisation du micromartelage après une certaine période de fonctionnement de l'échangeur s'explique par le fait que cette technique n'a été mise au point qu'après l'entrée en service de certains réacteurs nucléaires.

Pour effectuer le micromartelage des tubes des générateurs de vapeur, on utilise un outil de micromartelage qui doit d'abord être translaté à l'intérieur du tube sur une certaine distance afin d'être amené en position de travail. L'outil proprement dit se compose principalement d'une cage supportant de façon excentrée une ou plusieurs lames souples appelées "brosses" portant des microbilles. La rotation à grande vitesse de l'arbre portant les brosses a pour effet de marteler la paroi intérieure du tube à l'aide des microbilles. Afin que l'ensemble de la zone dudgeonnée du tube soit soumise à ce martelage, la cage de l'outil est elle-même déplacée selon une trajectoire donnée.

Dans la demande de brevet français n° 86 05515 du 17 avril 1986 (FR-A 2 597 381), on a décrit une installation dans laquelle une araignée accrochée aux tubes d'un générateur de vapeur permet d'amener simultanément plusieurs outils de micromartelage en face de plusieurs tubes du générateur. Le mouvement de translation des outils pour les amener en position de travail, puis pour les escamoter lorsqu'une opération est terminée, est assuré par des motoréducteurs portés par l'araignée, ces motoréducteurs entraînant des pignons qui s'engrènent directement sur des gaines flexibles ondulées, dont les extrémités sont fixées sur les cages des outils. Les mouvements de rotation des brosses et d'avance de la cage selon une trajectoire hélicoïdale sont également commandés par des motoréducteurs portés par le dispositif de positionnement et qui agissent sur chacun des outils par l'intermédiaire de deux flexibles coaxiaux.

Cette installation de micromartelage est très performante puisqu'elle permet de traiter simultanément plusieurs tubes pour chaque position de l'araignée. Cependant, son encombrement relativement important ne lui permet pas d'accéder à tous les tubes des générateurs de vapeur.

Pour cette raison, on a développé parallèlement à l'installation de micromartelage décrite dans la demande de brevet français n° 86 05515 une installation de micromartelage plus légère comprenant un seul outil porté par une araignée de plus faible encombrement. Dans cette installation, les motoréducteurs assurant la commande des différents mouvements sont montés sur un banc situé à l'extérieur du générateur de vapeur pour préserver la mobilité de l'araignée. Les différents motoréducteurs sont alors reliés à l'outil par des flexibles coaxiaux qui comprennent, de l'intérieur vers l'extérieur, un câble flexible, un tuyau flexible et une gaine flexible. Ce câble sert à transmettre le mouvement de rotation aux brosses de l'outil. Le tuyau sert à entraîner en rotation la cage de l'outil pour faire parcourir à cette cage un trajet hélicoïdal, sous l'effet de la coopération d'une tige filetée solidaire de ce tuyau avec un écrou porté par l'araignée. Enfin, la gaine sert à guider le câble et le tuyau entre une partie fixe du banc et l'araignée.

Dans cette installation, le banc comprend un ensemble mobile sur lequel sont raccordées les extrémités correspondantes du cable et du tuyau. Cet ensemble mobile du banc supporte donc les motoréducteurs permettant d'entraîner en rotation le câble et le tuyau.

Compte tenu de cette dernière caractéristique, le banc de cette installation connue comprend des moyens de guidage dont le dimensionnement est important, puisqu'ils doivent supporter un ensemble mobile dont le poids est élevé. De plus, la longueur de ces organes de guidage est importante, puisqu'elle doit correspondre à la course maximum nécessaire à l'introduction de l'outil dans le tube, augmentée de l'encombrement en longueur des motoréducteurs commandant la rotation des brosses et le déplacement du boîtier de l'outil. Par conséquent, le dispositif de commande d'une telle installation est encombrant et relativement coûteux.

Une installation similaire à cette dernière est décrite dans le document FR-A 2 526 532 et concerne le contrôle des tubes d'un échangeur de chaleur au moyen d'une sonde à mouvement hélicoïdal portée par une araignée. La sonde est reliée par un câble mobile dans une gaine et commandé en rotation à l'aide de motoréducteurs supportés par un banc de commande mobile en translation.

L'invention a précisément pour objet une installation permettant de commander à distance l'introduction d'un organe tel qu'un outil de micromartelage dans un tube, dont la conception générale est comparable à celle des deux dernières installations qui viennent d'être décrite, mais qui permet d'en réduire très sensiblement les moyens de guidage et d'en limiter la longueur, afin que l'encombrement et le coût du dispositif de commande soient réduits.

Selon l'invention, ce résultat est obtenu au moyen d'une installation pour commander à distance la translation d'un organe dans un tube contenu dans une enceinte, par l'intermédiaire d'un ensemble comprenant une gaine de guidage extérieure flexible et un flexible de transmission logé dans ladite gaine et portant ledit organe à une première extrémité, cette installation comprenant de plus un dispositif de positionnement de l'outil en vis-à-vis du tube, auquel est fixée une première extrémité de la gaine et un dispositif de commande de ladite translation situé à l'extérieur de ladite enceinte, sur lequel sont raccordées les deuxièmes extrémités de la gaine et du flexible caractérisée en ce que, le dispositif de commande étant fixe et disposé de telle sorte que la gaine n'est pas rectiligne, la deuxième extrémité du flexible est immobilisée en translation par rapport au dispositif de commande, ce dernier comprenant des moyens de commande de translation de la deuxième extrémité de la gaine sur le flexible.

Grâce à cette configuration, le dispositif de commande est pratiquement fixe dans sa totalité, de sorte que les moyens de guidage sont presque inexistants. De plus, la longueur du dispositif de commande peut pratiquement être limitée à la course nécessaire à l'introduction de l'outil dans le tube. L'encombrement du dispositif de commande et le coût de l'installation s'en trouvent sensiblement réduits.

Dans un mode de réalisation préféré de l'invention, un tube de guidage rigide est fixé à la deuxième extrémité de ladite gaine et pourvu d'une crémaillère sur laquelle est engrené un pignon entraîné par les moyens de commande de translation.

Comme on l'a mentionné précédemment, le dispositif de commande comprend de préférence des moyens de commande de rotation du flexible de transmission.

En particulier, dans l'application à une installation permettant d'introduire un outil de micromartelage dans un tube, le flexible de transmission comprend un tuyau flexible externe et un câble flexible interne à ce tuyau, lesdits moyens de commande de rotation comprenant de premiers moyens de commande de rotation du tuyau et de deuxième moyens de commande de rotation du câble.

Un exemple de réalisation de l'invention va maintenant être décrit, à titre d'exemple nullement limitatif, en se référant aux dessins annexés dans lesquels :

- la figure 1 est une vue d'ensemble représentant de façon schématique et en coupe partielle une installation selon l'invention, implantée dans la boîte à eau d'un générateur de vapeur d'une centrale nucléaire ;
- la figure 2 est une vue à plus grande échelle représentant en coupe l'ensemble du dispositif de commande situé à l'extérieur de la boîte à eau ainsi que la partie de l'installation portée par l'araignée ;
la figure 3 est une vue représentant de façon schématique, à plus grande échelle et en coupe partielle la partie de l'installation supportée par l'araignée ;
- la figure 4 est une vue schématique et en coupe partielle représentant le mécanisme d'entraînement du tube de guidage lié à la gaine, porté par le dispositif de commande et servant à commander à distance la translation de l'outil ;
- la figure 5 est une vue en coupe selon la ligne V-V de la figure 4 ;
- la figure 6 est une vue en coupe longitudinale représentant à plus grande échelle le mécanisme par lequel le câble et le tuyau flexibles servant à commander respectivement la rotation des brosses de l'outil et le cheminement hélicoïdal de celui-ci sont fixés aux organes du dispositif de commande qui en assurent l'entraînement en rotation ; et
- la figure 7 est une vue en coupe et à plus grande échelle selon la ligne VII-VII de la figure 2.

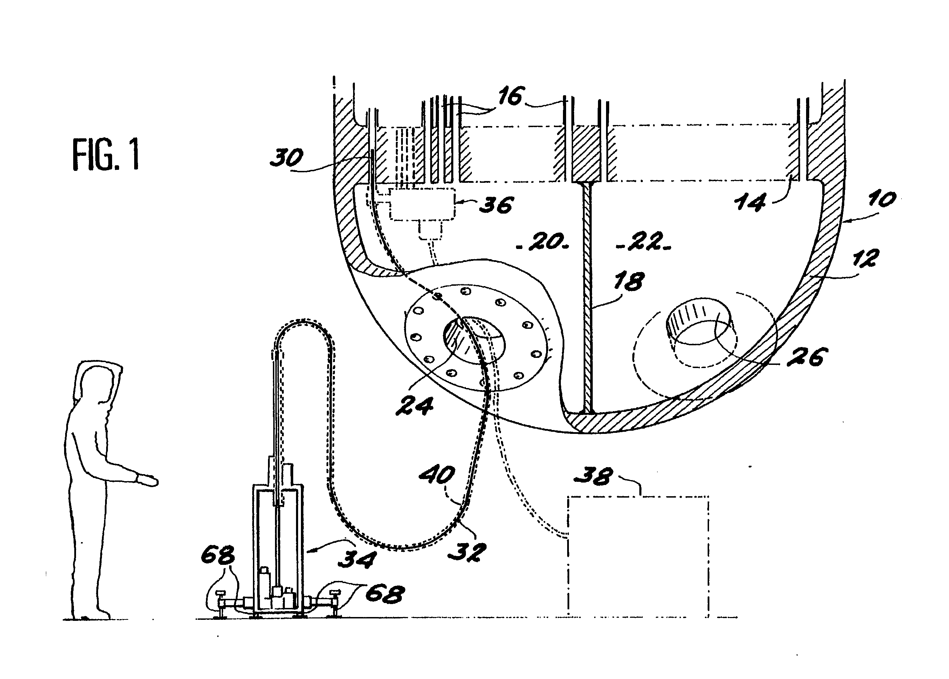

Sur la figure 1, on reconnaît l'extrémité inférieure d'un générateur de vapeur 10 tel que ceux qui équipent certaines centrales nucléaires.

Ce générateur de vapeur comprend une enveloppe extérieure 12 dont seule la partie inférieure hémisphérique apparaît sur la figure. Une plaque métallique horizontale épaisse 14 est soudée à l'intérieur de l'enveloppe 12, juste au-dessus de cette partie hémisphérique. Cette plaque 14 est percée d'une multitude de trous dans lesquels sont fixées les deux extrémités de tubes en U renversés 16. Cette fixation est généralement effectuée à la fois par soudage des extrémités des tubes sur la face inférieure de la plaque 14 et par dudgeonnage des parties des tubes situées à proximité de la face supérieure de cette plaque.

La partie du générateur de vapeur délimitée entre la plaque 14 et le fond hémisphérique de la paroi extérieure 12, généralement appelée boîte à eau, est séparée en deux parties égales par une cloison verticale 18. La disposition des tubes 16 est telle que les deux extrémités de chacun des tubes débouchent respectivement de part et d'autre de cette cloison 18 dans la boîte à eau. On délimite ainsi de part et d'autre de la cloison 18 un collecteur d'entrée 20 et un collecteur de sortie 22.

Les collecteurs d'entrée 20 et de sortie 22 sont raccordés par des tuyauteries (non représentées) à une cuve extérieure contenant le coeur du réacteur. De plus, des trous d'homme 24, 26 sont formés dans la paroi 12 du générateur de vapeur 10, afin de permettre l'accès à chacun des collecteurs 20 et 22. Chacun de ces trous d'homme est obturé par un bouchon lorsque le réacteur est en fonctionnement.

Comme l'illustre la figure 1, il peut être nécessaire lors d'un arrêt du réacteur de procéder à un micromartelage des zones dudgeonnées des tubes 16, afin d'éliminer les tensions internes induites dans les tubes lors du dudgeonnage et, par conséquent, de réduire les risques de corrosion sous tension. L'ensemble du circuit primaire du réacteur est alors vidangé et les bouchons obturant les trous d'homme 24 et 26 sont enlevés.

L'installation permettant conformément à l'invention d'introduire l'outil de micromartelage jusque dans la zone dudgeonnée de chacun des tubes et d'en commander la mise en oeuvre est représentée de façon très schématique sur la figure 1.

Cette installation comprend un outil de micromartelage 30 monté à une extrémité d'un flexible de transmission 32 dont l'extrémité opposée est immobilisée en translation par rapport à un dispositif de commande constitué par un banc 34 placé de façon fixe à l'extérieur du générateur de vapeur. L'outil 30 et l'extrémité attenante du flexible de transmission 32 sont supportés à proximité de la plaque à tubes 14 du générateur de vapeur par un dispositif porteur 36 qui assure par ailleurs le positionnement de l'outil dans le prolongement de l'extrémité de l'un des tubes 16, ainsi que son déplacement entre chacun des tubes.

Le dispositif de positionnement 36 peut être constitué par tout dispositif de positionnement du type "araignée", pourvu de doigts extensibles pouvant venir s'accrocher à l'intérieur des extrémités des tubes 16 et dont la conception lui permet de se déplacer en-dessous de la plaque 14 pour amener l'outil 30 en face de l'extrémité de chacun des tubes débouchant dans le collecteur correspondant. Ce dispositif de positionnement peut notamment être réalisé de la manière décrite dans le document FR-A-2 394 374. Comme on l'a représenté schématiquement sur la figure 1, son déplacement est commandé à distance et de façon connue par un système de commande électronique 38.

Pour assurer le guidage du flexible de transmission 32 entre l'outil 30 et le banc 34, le flexible 32 est placé dans une gaine extérieure flexible 40 dont une extrémité est fixée sur l'araignée 36 et dont l'extrémité opposée est liée au banc 34 d'une manière qui sera décrite ultérieurement.

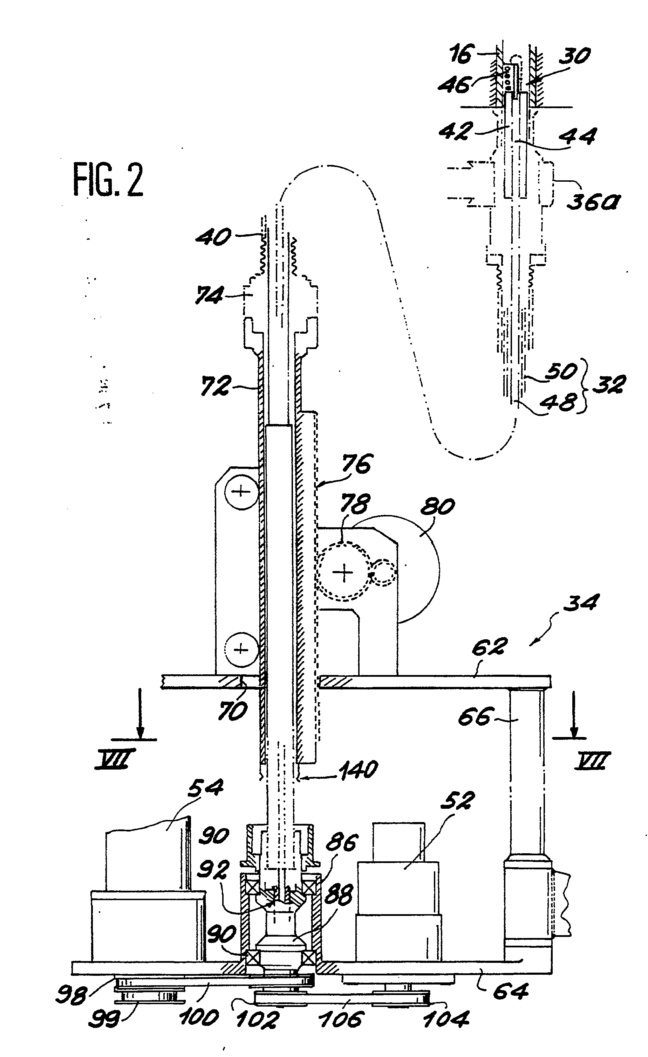

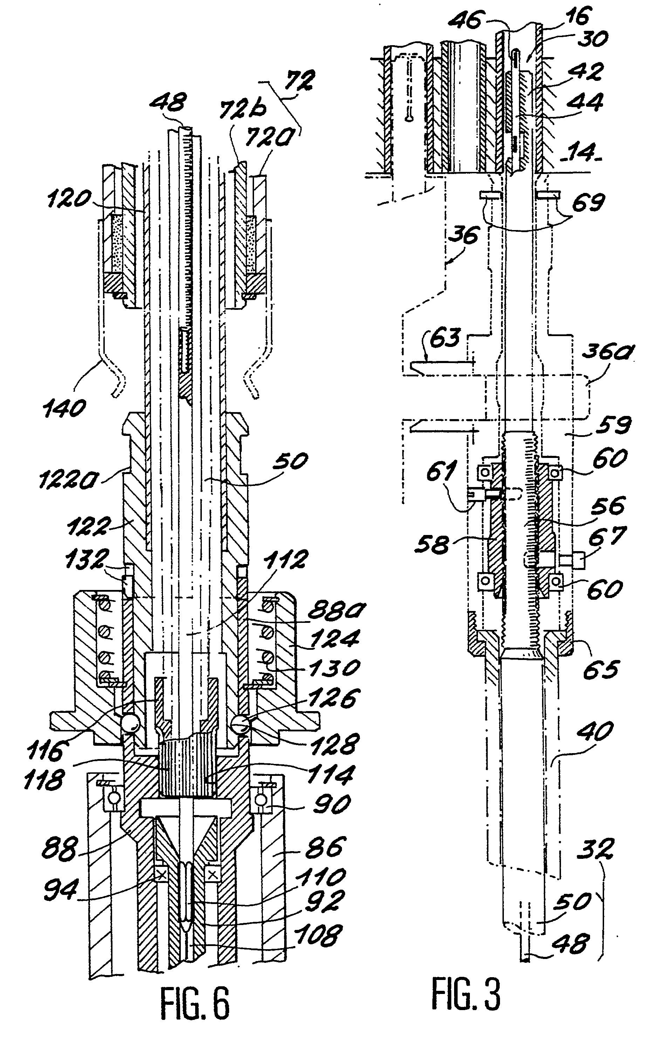

L'outil de micromartelage 30 est comparable à celui qui est décrit dans la demande de brevet français n° 86 05515. Une description détaillée n'en sera donc pas faite ici. Pour la bonne compréhension de la description qui va suivre, on indiquera simplement ici en se référant aux figures 2 et 3 que cet outil 30 comprend une cage 42, de diamètre extérieur légèrement inférieur au diamètre intérieur des tubes 16. Cette cage 42 supporte un arbre tournant 44 dont l'axe est excentré par rapport à celui de la cage. Sur l'arbre tournant 44 sont fixées une ou plusieurs lames souples ou brosses 46 portant des microbilles sur leur face qui vient frapper la surface intérieure du tube 16 lors d'une rotation de l'arbre 44.

Comme le montrent également les figures 2 et 3, le flexible de transmission 32 comprend un câble flexible 48 gainé par un tube de tétrafluoréthylène et un tuyau métallique flexible 50 dans lequel peut tourner le câble 48.

L'extrémité du câble 48 adjacente à l'outil 30 est fixée sur l'arbre 44. En entraînant en rotation à grande vitesse (par exemple, 3000 tours/mn) le câble flexible 48 par son extrémité opposée raccordée sur le banc 34, à l'aide d'un moteur couple 52 équipé d'une génératrice tachimétrique, d'une manière qui sera décrite plus en détail ultérieurement, on assure donc l'entraînement en rotation de l'arbre 44 de l'outil et des brosses 46 supportées par cet arbre. On réalise ainsi le martelage de la surface intérieure du tube 16.

Afin que ce martelage soit réalisé sur toute la périphérie du tube et sur toute la longueur de la zone dudgeonnée, la rotation à grande vitesse de l'arbre 44 s'accompagne d'un déplacement de la cage 42 de l'outil selon une trajectoire en hélice. Cette trajectoire est obtenue en fixant une extrémité du tuyau 50 sur la cage 42 de l'outil et en entraînant en rotation à vitesse relativement lente (par exemple, 15 tours/mn) l'extrémité opposée du tuyau 50 reliée au dispositif de commande 34, à l'aide d'un motoréducteur 54 équipé d'une génératrice tachimétrique, d'une manière qui sera décrite plus en détail ultérieurement.

Comme le montre la figure 3, ce mouvement de rotation du flexible tubulaire 50 est transformé en un mouvement hélicoïdal de la cage 42 de l'outil par une tige tubulaire filetée 56, fixée par exemple par brasure sur le tuyau flexible 50. Lorsque l'outil a été introduit dans le tube, en position de travail, cette tige filetée 56 vient en butée contre un écrou 58 supporté par l'araignée 36. La rotation du tuyau flexible 50 commandée par le motoréducteur 54 a alors pour effet de visser la tige 56 dans l'écrou 58 et, par conséquent, de faire décrire à l'outil une trajectoire hélicoïdale.

On voit également sur la figure 3 que l'écrou est monté dans un tube guide vertical 59 par l'intermédiaire de paliers 60 autorisant sa rotation. L'amplitude de cette rotation est limitée à 180° par un doigt 61 fixé sur le tube guide 59 et pénétrant dans une fente circonférentielle en demi-cercle formée sur l'écrou 58. Cette caractéristique permet de décaler d'un demi-pas les trajectoires aller et retour de l'outil dans le tube 16 à usiner, d'une manière qui a été décrite en détail dans la demande de brevet français n°86 05515.

De préférence, le tube guide 59 est fixé sur un bras support 36a de l'araignée 36 par un mécanisme 63 assurant son positionnement et son verrouillage à distance de façon automatique.

La gaine 40 est fixée à l'extrémité inférieure du tube guide 59 par un écrou 65.

En plus de l'écrou 58, le tube guide 59 supporte un détecteur 67 traversant une autre fente circonférentielle formée à l'extrémité inférieure de l'écrou 58 et permettant de savoir si la tige filetée 56 est ou non présente dans l'écrou (après quelques tours de vissage).

Enfin, le tube guide 59 se prolonge jusqu'à proximité immédiate de la plaque 14 et supporte à ce niveau des détecteurs infrarouges en vis-à-vis 69 permettant de repérer la position basse de l'outil 30 autorisant un déplacement de l'araignée 36 sur la plaque 14.

Conformément à l'invention, l'installation est pourvue de moyens permettant de commander à distance la translation de l'outil 30 à l'intérieur du tube 16 à usiner successivement pour amener cet outil en position de travail puis pour l'escamoter hors du tube lorsque le martelage est terminé. Au niveau de l'araignée 36, ce mouvement correspond à un déplacement de l'outil 30 et du flexible de transmission 32 permettant successivement d'amener la tige filetée 56 en butée contre l'extrémité inférieure de l'écrou 58 (position de travail), puis de descendre la tige filetée 56 jusqu'à une certaine distance en-dessous de l'écrou 58, afin que l'outil soit entièrement escamoté à l'intérieur du tube guide 59 (position de déplacement).

Conformément à l'invention, ce résultat est obtenu par un déplacement de l'extrémité de la gaine 40 adjacente au banc 34, l'extrémité correspondante du flexible 32 étant immobilisée en translation sur ce banc 34. Il est à noter qu'une telle translation de l'extrémité de la gaine 40 par rapport au banc 34 qui est fixe ne conduit à l'effet désiré d'une translation de l'outil 30 à l'intérieur du tube 16 à marteler que parce que le flexible 32 et la gaine 40 suivent entre les dispositifs 34 et 36 une trajectoire non rectiligne.

Comme l'illustre en particulier la figure 2, le banc 34 comprend deux plaques ou platines horizontales 62 et 64, par exemple carrées, disposées l'une au-dessus de l'autre et reliées entre elles par des colonnes verticales 66. L'ensemble rigide ainsi formé repose sur le sol par des pieds 68 dont certains sont, de préférence, réglables. Ces pieds sont fixés sur la partie inférieure des colonnes 66 ou sur la plaque inférieure 64. Ils assurent l'immobilisation du banc sur le sol dans une position dans laquelle ce banc présente un axe de symétrie vertical.

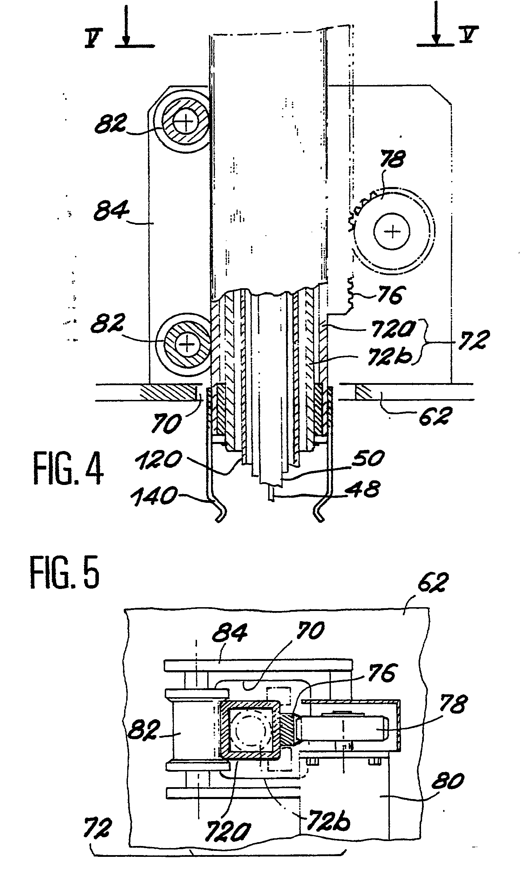

On voit sur les figures 4 et 5 que la plaque supérieure 62 est percée en son centre d'un trou 70 que traverse librement un tube de guidage 72 rigide et vertical. Ce tube 72 est constitué d'un tube extérieur 72a de section carrée, et d'un tube intérieur cylindrique 72b inscrit à l'intérieur du tube 72a.

La gaine 40 est fixée à l'extrémité supérieure du tube cylindrique 72b au moyen d'un raccord 74 (figure 2), soit directement, soit par l'intermédiaire d'une crosse rigide ou réglable permettant de donner au flexible une direction privilégiée en sortie de banc. Le tube cylindrique 72b sert essentiellement au guidage du flexible 32 au-delà de l'extrémité de la gaine 40.

Sur l'une de ses faces, le tube carré 72a est pourvu d'une crémaillère 76 sur laquelle est engréné un pignon 78 dont l'axe horizontal est entraîné en rotation par un motoréducteur 80 monté sur un support de motorisation 84 fixé sur la face supérieure de la plaque 62.

Sur sa face opposée à celle qui porte la crémaillère 76, le tube 72 de section carrée est en appui sur deux galets 82 dont les axes horizontaux sont placés dans un même plan vertical, l'un au-dessus de l'autre, et supportés par le support de motorisation 84. Ces galets 82 assurent le guidage du tube 72 selon une direction de déplacement verticale, empêchent sa rotation et maintiennent la crémaillère 76 en engrènement sur le pignon 78.

Le câble flexible 48 et le tuyau flexible 50 constituant le flexible de transmission 32 étant immobilisés en translation à leurs extrémités inférieures par rapport à la plaque inférieure 64 du banc 34, une translation du tube 72 commandée par le motoréducteur 80 conduit à une translation de l'outil 30 à l'intérieur du tube 16 sur une longueur égale à celle du déplacement du tube 72 commandé par le moteur 80, et en sens inverse.

Etant donné que seul le tube 72 se déplace par rapport au banc fixe 34, la structure nécessaire au guidage de cette partie mobile, qui vient d'être décrite en se référant aux figures 4 et 5, est particulièrement simple et peu encombrante.

De préférence, des détecteurs magnétiques de fin de course (non représentés) sont montés de façon réglable sur le support de motorisation 84. Deux aimants (non représentés) montés sur le tube de guidage 72, provoquent l'arrêt en position haute ou en position basse du tube, lorsqu'ils passent devant les détecteurs.

La détection de la position basse de l'outil a pour but d'assurer, en fin de translation retour du flexible 32, le positionnement de l'outil 30 sous la plaque 14 et au-dessus du détecteur 67 (figure 3).

La détection de la position haute de l'outil a pour but d'assurer le contact de la tige filetée 56 avec l'écrou 58, afin d'obtenir l'engrènement. Dans ce but, on donne au flexible 32 une légère compression sur quelques millimètres.

Les moyens permettant de fixer les extrémités inférieures du câble flexible 48 et du tuyau flexible 50 sur les organes associés à la plaque inférieure 64 et assurant leur entraînement en rotation, ainsi que ces organes eux-mêmes, vont maintenant être décrits plus en détail en se référant aux figures 2, 6 et 7.

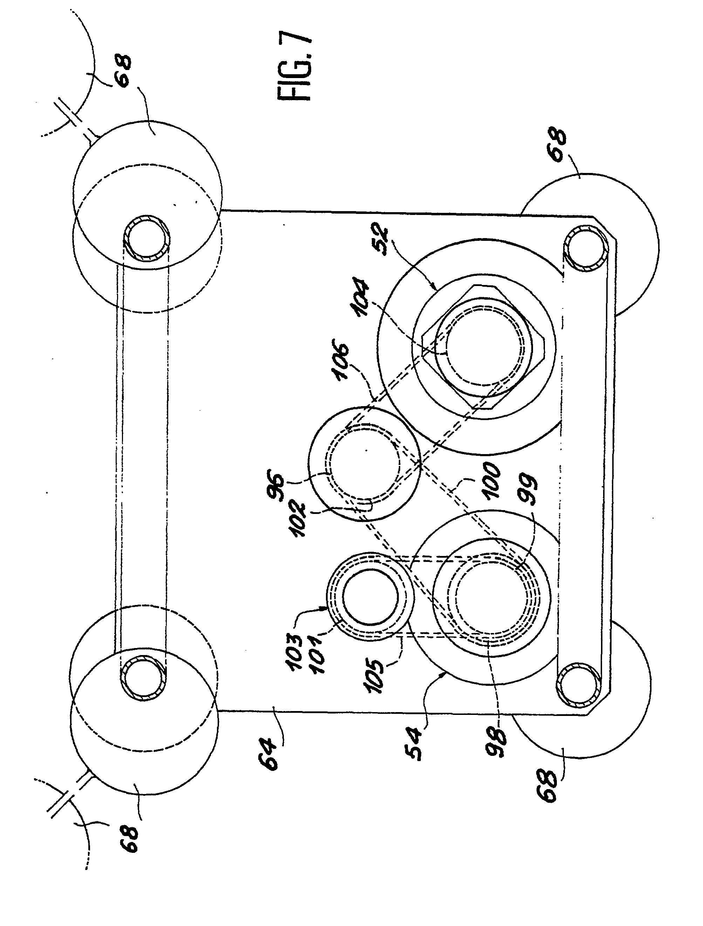

On voit tout d'abord sur la figure 2 que la plaque inférieure 64 est percée en son centre d'un trou aligné verticalement avec le trou 70 formé au centre de la plaque supérieure 62. Une douille 86 d'axe vertical, centrée sur l'axe de ce trou, est fixée sur la face supérieure de la plaque 64. Un arbre d'entraînement creux 88 est supporté de façon tournante à l'intérieur de la douille 86, par l'intermédiaire de deux paliers 90. Comme le montre mieux la figure 6, un deuxième arbre creux 92 est supporté de façon tournante à l'intérieur de l'arbre creux 88 par deux paliers 94.

Comme l'illustrent les figures 2 et 7, l'arbre creux extérieur 88 traverse l'ouverture formée dans la plaque 64 et porte un pignon denté 96 en-dessous de celle-ci. Le motoréducteur 54 commandant l'entraînement en rotation du tuyau flexible 50 est fixé sur la face supérieure de la plaque 64 et son arbre de sortie orienté verticalement traverse cette plaque et supporte un pignon denté 98 en-dessous de celle-ci, ce pignon denté 98 étant situé dans le même plan horizontal que le pignon 96. Une courroie crantée 100 est engrénée à la fois sur les pignons 96 et 98, de façon à assurer la transmission du mouvement de rotation de l'arbre de sortie du moteur 54 à l'arbre creux extérieur 88.

L'arbre de sortie du motoréducteur 54 supporte un deuxième pignon 99 qui est disposé dans le même plan horizontal qu'un pignon 101 (figure 7), solidaire de l'arbre de sortie d'un codeur incrémental 103, également supporté par la plaque inférieure 64. Les pignons 99 et 101 sont reliés entre eux par une courroie crantée 105. Le codeur 103 permet ainsi de contrôler le nombre de tours effectués par l'outil 30 lors d'une opération de martelage.

L'arbre creux intérieur 92 fait saillie en-dessous de l'extrémité inférieure de l'arbre 88 et porte à ce niveau un pignon 102. Le moteur couple 52 servant à entraîner en rotation l'arbre flexible 48 est également fixé sur la face supérieure de la plaque 64 et son arbre vertical traverse cette plaque et supporte à son extrémité inférieure, dans le même plan horizontal que le pignon 102, un pignon 104. Comme on le voit notamment sur la figure 7, une courroie crantée 106 est engrénée à la fois sur les pignons 102 et 104 afin de transmettre à l'arbre intérieur creux 92 tout mouvement de rotation de l'arbre de sortie du moteur couple 52.

Comme l'illustre bien la figure 6, l'arbre creux intérieur 92 est traversé en son centre par un passage 108 de section carrée, réalisé par exemple par brochage. A l'intérieur de ce passage 108 vient se placer l'extrémité de section carrée complémentaire 110 d'un embout rigide 112 fixé à l'extrémité du câble flexible 48.

L'arbre creux extérieur 88 présente une partie en saillie au-dessus de l'extrémité supérieure de l'arbre creux 92. La surface intérieure de cette partie en saillie est pourvue de cannelures 114 qui peuvent également être réalisées par brochage. Un embout 116, fixé à l'extrémité correspondante du tuyau flexible 50, est pourvu sur sa surface extérieure de cannelures 118 complémentaires des cannelures 114.

Afin d'assurer le guidage vertical du câble flexible 48 et du tuyau flexible 50 entre les plaques 62 et 64 du dispositif de commande 34, le tuyau flexible 50 est placé à l'intérieur d'un tube enveloppe 120, rigide et vertical. L'extrémité inférieure de ce tube enveloppe 120 est solidarisée d'un embout 122 qui est emmanché dans une partie supérieure tubulaire 88a de l'arbre creux 88, cette partie 88a étant située au-dessus des cannelures 114. L'embout 122 sert à maintenir l'embout 116 du tuyau flexible 50 en prise avec les cannelures 114 de l'arbre creux 88.

Une bague de verrouillage 124 est montée sur cette partie supérieure tubulaire 88a de l'arbre creux, de façon à pouvoir coulisser verticalement entre une position haute de déverrouillage et une position basse de verrouillage, représentée sur la figure 6. Dans cette position de verrouillage, la bague 124 applique des billes 126 placées dans des trous traversant radialement la partie 88a de l'arbre creux dans une gorge 128 formée sur la surface extérieure de l'embout 122. Un ressort de compression 130 est interposé entre la bague de verrouillage 124 et la partie 88a de l'arbre creux, de façon à maintenir normalement la bague dans sa position basse de verrouillage.

Lorsque l'embout 122 et l'arbre creux 88 sont reliés par le mécanisme de verrouillage à billes 126 qui vient d'être décrit, ils sont également solidarisés en rotation par des tenons complémentaires 132.

Comme le montre également la figure 6, dans le cas où le tube de guidage 72 portant la crémaillère 76 occupe sa position la plus basse, le tube cylindrique 72b coulisse sur le tube enveloppe 120 pour en assurer le guidage.

Un organe de blocage constitué dans l'exemple représenté par une bague 140 est fixée à l'extrémité inférieure du tube 72. Lorsque ce tube 72 est dans sa position la plus haute, la bague 140 est située immédiatement en-dessous de la plaque supérieure 62, comme l'illustre la figure 4. Après avoir déverrouillé l'embout 122 de l'arbre 88 à l'aide de la bague 124 un opérateur peut amener cet embout 122 en position haute, où il est bloqué par l'engagement élastique de la bague 140 dans une gorge 122a formée à l'extrémité supérieure de l'embout.

Dans ces conditions, l'opérateur peut accéder à l'extrémité du flexible 32 fixée sur le dispositif 34. En tirant sur cette extrémité, le flexible et l'outil 30 qu'il porte à son extrémité opposée sont extraits très facilement. Il est ainsi possible d'intervenir sur l'outil ou sur le flexible, par exemple pour changer les brosses 46, depuis l'extérieur du générateur de vapeur et de façon très simple, sans effectuer aucun démontage de l'installation.

Lorsque le tube 72 est en position haute, il est à noter que l'extrémité supérieure du tube enveloppe 120 reste toujours engagée dans le tube 72b, afin que le guidage en position verticale du flexible 32 soit toujours réalisé entre les plaques 62 et 64.

Bien entendu, l'invention n'est pas limitée au mode de réalisation qui vient d'être décrit à titre d'exemple, mais en couvre toutes les variantes. En particulier, bien que l'invention soit particulièrement adaptée à l'introduction et à la commande d'un outil de micromartelage dans les tubes des générateurs de vapeur équipant les centrales nucléaires, elle peut aussi être utilisée pour introduire d'autres outils tels que des meules ou des organes de mesure ou de contrôle tels que des sondes à courants de Foucault et dans des tubes de toute autre nature. Les deux commandes de rotation du flexible peuvent alors être remplacées par une commande unique. Dans tous les cas, un gain important sur l'encombrement et le coût de l'installation est obtenu.

**Revendications**

1. Installation pour commander à distance la translation d'un organe (30) dans un tube (16) contenu dans une enceinte (10), par l'intermédiaire d'un ensemble comprenant une gaine de guidage extérieure flexible (40) et un flexible de transmission (32) logé dans ladite gaine et portant ledit organe à une première extrémité, cette installation comprenant de plus un dispositif (36) de positionnement de l'outil en vis-à-vis du tube, auquel est fixée une première extrémité de la gaine (40), et un dispositif (34) de commande de ladite translation situé à l'extérieur de ladite enceinte (10), sur lequel sont raccordées les deuxièmes extrémités de la gaine et du flexible, caractérisée en ce que, le dispositif de commande (34) étant fixe et disposé de telle sorte que la gaine (40) n'est pas rectiligne, la deuxième extrémité du flexible (32) est immobilisée en translation par rapport au dispositif de commande, ce dernier comprenant des moyens (80) de commande de translation de la deuxième extrémité de la gaine sur le flexible.

2. Installation selon la revendication 1, caractérisée en ce qu'un tube de guidage rigide (72) est fixé à la deuxième extrémité de ladite gaine (40) et pourvu d'une crémaillère (76) sur laquelle est engréné un pignon (78) entraîné par les moyens de commande de translation (80).

3. Installation selon l'une quelconque des revendications 1 et 2, caractérisée en ce que la deuxième extrémité du flexible (32) est reliée au dispositif de commande (34) par un organe d'immobilisation en translation (122) déverrouillable, de telle sorte que le flexible (32) portant l'organe (30) peut être extrait à partir du dispositif de commande (34), après déverrouillage dudit organe d'immobilisation en translation (122).

4. Installation selon l'une quelconque des revendications 1 à 3, caractérisée en ce que le dispositif de commande (34) comprend des moyens de commande de rotation (52, 54) du flexible de transmission (32).

5. Installation selon la revendication 4, caractérisée en ce que le flexible de transmission (32) comprend un tuyau flexible (50) externe et un câble flexible (48) interne à ce tuyau, lesdits moyens de commande de rotation comprenant de premiers moyens (54) de commande de rotation du tuyau (50) et de deuxièmes moyens (52) de commande de rotation du câble (48).

**Patentansprüche**

1. Fernsteuereinrichtung für die Verschiebung eines Organs (30) in einem Rohr (16), das in einem Behälter (10) enthalten ist, mittels einer Anordnung, die einen flexiblen Außenführungsmantel (40) und ein darin angeordnetes flexibles übertragungsglied, das das genannte Organ an einem ersten Ende trägt, aufweist, wobei die genannte Einrichtung weiterhin eine Werkzeugpositioniervorrichtung (36) gegenüber dem Rohr aufweist, an der ein erstes Ende des genannten Mantels (40) befestigt ist und eine Steuervorrichtung für die Verschiebung, die außerhalb des genannten Behälters (10) gelegen ist, an der die zweiten Enden des Mantels und des flexiblen Elements angeschlossen sind, dadurch gekennzeichnet, daß die Steuervorrichtung (34) fest ist und derart angeordnet ist daß der Mantel (40) nicht geradlinig ist, das zweite Ende des flexiblen Elements (32) translatorisch gegenüber der Steuervorrichtung unbeweglich ist und letztere Einrichtungen (80) zur Steuerung der Verschiebung des zweiten Endes des Mantels gegenüber dem flexiblen Element aufweist.

2. Einrichtung nach Anspruch 1, dadurch gekennzeichnet, dar ein steifes Führungsrohr (72) am zweiten Ende des genannten Mantels (40) befestigt ist und mit einer Zahnung (76) versehen ist, in die ein Ritzel (78) eingreift, das durch die Verschiebesteuereinrichtungen (80) angetrieben ist.

3. Einrichtung nach einem der Ansprüche 1 und 2, dadurch gekennzeichnet, daß das zweite Ende des flexiblen Elements (32) an der Steuervorrichtung (34) mittels eines entriegelbaren Längsfeststellorgans (122) derart befestigt ist, daß das flexible Element (32), das das Organ (30) trägt, nach Entriegelung des Längsfeststellorgans (122) von der Steuervorrichtung (34) abgezogen werden kann.

4. Einrichtung nach einem der Ansprüche 1 bis 3, dadurch gekennzeichnet, daß die Steuervorrichtung (34) eine Drehsteuereinrichtung (52, 54) für das flexible Verstellelement (32) aufweist.

5. Einrichtung nach Anspruch 4, dadurch gekennzeichnet, daß das flexible Verstellelement (32) eine flexible Außenröhre (50) und ein flexibles Kabel (48) in der Röhre aufweist, wobei die Drehsteuereinrichtung eine erste Einrichtung (54) zur Steuerung der Drehung der Röhre (50) und eine zweite Einrichtung (52) zur Steuerung der Drehung des Kabels (48) enthält.

**Claims**

1. Installation for the remote control of the translation of a component (30) in a tube (16) contained in a chamber (10) via a unit comprising an outer flexible guiding sleeve (40) and a transmission hose (32) housed in said sleeve and bearing said component at a first end. this installation also comprising a device (36), for positioning the tool in relation to the tube, to which is fixed a first end of the sleeve (40), and a device (34) for controlling said translation which is located outside said chamber (10) and on which the two ends of the sleeve and the hose are connected, characterized in that, the control device (34) being fixed and arranged in such a way that the sleeve (40) is not rectilinear, the second end of the hose (32) is immobilized in translation in relation to the control device, this latter comprising means (80) for controlling translation of the second end of the sleeve on the hose.

2. Installation according to Claim 1. characterized in that a rigid guiding tube (72) is fixed to the second end of said sleeve (40) and provided with a toothed rack (76) on which a pinion (78) is engaged which is driven by the means controlling translation (80).

3. Installation according to Claim 1 or 2, characterized in that the second end of the hose (32, is linked to the control device (34) by a releasable component for immobilization in translation (122). in such a way that the hose (32) bearing the component (30) can be withdrawn from the control device after releasing of said component for immobilization in translation (122).

4. Installation according to any one of Claims 1 to 3, characterized in that the control device (34) comprises, means of controlling rotation (52, 54) of the transmission hose (32).

5. Installation according to Claim 4. characterized in that the transmission hose (32) comprises an external flexible tube (50) and a flexible cable (48) inside this tube, said means of controlling rotation comprising first means (54) for controlling rotation of the tube (50) and second means (52) for controlling rotation of the cable (48).

FIG. 1

FIG. 2

FIG. 6

FIG. 3

FIG. 4

FIG. 5

FIG. 7